Europäisches Patentamt

European Patent Office

Office européen des brevets

(11) Veröffentlichungsnummer: **0 456 861 A1**

## (12) EUROPÄISCHE PATENTANMELDUNG

(21) Anmeldenummer: 90109308.8

(51) Int. Cl.⁵: **B04B 13/00**

(22) Anmeldetag: 17.05.90

(43) Veröffentlichungstag der Anmeldung:
21.11.91 Patentblatt 91/47

(84) Benannte Vertragsstaaten:
CH FR GB IT LI

(71) Anmelder: **Krauss-Maffei Aktiengesellschaft**
**Krauss-Maffei-Strasse 2**
**W-8000 München 50(DE)**

(72) Erfinder: **Kampschulte, Rainer, Dipl.-Ing. (FH)**
**Schulstrasse 7**
**W-8071 Münchsmünster(DE)**

(54) Vorrichtung zum ergebnisabhängigen Steuern einer Filterzentrifuge.

(57) Die Erfindung bezieht sich auf eine Vorrichtung, mit der mittels eines die Füllungsoberfläche einer Filterzentrifuge kontaktierenden Fühlerarmes die Schichtdicke der Zentrifugenfüllung ermittelt werden kann. Um in der Lage zu sein, zu jedem Betriebszeitpunkt der Filterzentrifuge die jeweilige Beschaffenheit der Oberfläche (flüssig oder fest) bestimmen zu können, wird vorgeschlagen, am Fühlerarm einen Schwingungssensor anzuordnen, dessen Meßwert z.B. nach der Maßgabe verwertet wird, daß eine signifikante Veränderung der Schwingungscharakteristik als Zeitpunkt für das Eintauchen der Flüssigkeit in den sedimentierten Feststoffkuchen (Eintauchpunkt) gewertet wird.

Fig. 2

Eine Vorrichtung dieser Art ist aus dem sowjetischen Erfinderschein Nr. 30 21 38 bekannt, mit der gleichzeitig sowohl die Schichthöhe als auch die physikalische Beschaffenheit der Oberfläche der Füllung der Filterzentrifuge ermittelt werden kann. Letztere wird dadurch ermittelt, daß an der Stelle, an der sich der Fühlerarm in Kontakt mit der Füllungsoberfläche befindet, mittels einer Unterdruckleitung und einem angeschlossenen Druckmeßgerät die Druckverhälnisse gemessen werden, die je nach Beschaffenheit der Füllungsoberfläche (fest oder flüssig) einen charakteristischen Wert einnehmen. Dabei ergibt sich der Nachteil, daß sich die Unterdruckleitung leicht verstopfen oder verunreinigen kann, wodurch die Gefahr besteht, daß keine oder nur verfälschte Meßergebnisse erlangt werden können.

Aus der US-PS 3,420,374 ist es ferner bekannt bei einem Fühlerarm einen Schwingungssensor anzuordnen. Dieser Fühlerarm ist jedoch fest eingestellt, wodurch dieser nur geeignet ist, durch ein Schwingungssignal das Erreichen einer vorbestimmten Füllstandshöhe anzuzeigen. Ein Meßwert, mit dem eine präzise Aussage darüber gemacht werden kann, ob die Oberfläche der Füllung der Zentrifuge aus einer Flüssigkeit oder aus einem Feststoffkuchen besteht, ist mit dieser Vorrichtung nicht zu erzielen. Dementsprechend ist diese bekannte Vorrichtung auch nicht geeignet, den Zeitpunkt zu ermitteln zu dem die Filtratflüssigkeit durch den sedimentierten Feststoffkuchen dringt (Eintauchpunkt).Aus der Patentanmeldung P 37 26 227 ist es auch bekannt, den Fühlerarm an seiner Kontaktfläche mit einem Sensor, vorzugsweise mit einem Thermofühler zu versehen, mit dem aufgrund unterschiedlicher Reibungswärme - Meßwerte beim Überfahren einer Flüssigkeitsoberfläche bzw. einer Filterkuchenoberfläche der Eindringzeitpunkt der Filtratflüssigkeit in den sedimentierten Filterkuchen gemessen werden kann. Derartige Sensoren unterliegen jedoch Verschleiß und beinhalten die Gefahr von Explosionsauslösung.

Der Erfindung liegt die Aufgabe zugrunde, bei einer Filterzentrifuge der genannten Art den Fühlerarm so auszubilden, daß ein Ausfall oder eine Beeinträchtigung von Meßergebnissen durch Verstopfung oder Verschleißerscheinungen ausgeschlossen werden kann.

Die erfindungsgemäße Lösung der Aufgabe ist in Anspruch 1 angegeben. Damit ist eine Meßvorrichtung geschaffen, mit der auch über einen langen Betriebszeitraum zuverlässige Meßwerte über den Eindringzeitpunkt der Flüssigkeit (Filtratflüssigkeit bzw. Sedimentationsflüssigkeit) in den Feststoffkuchen erzielt werden können. Da der Schwingungssensor weit entfernt an der Kontaktfläche, in einer bevorzugten Ausführungsform sogar außerhalb des Zentrifugengehäuses angeordnet

ist, unterliegt dieser keinem nennenswerten Verschleiß. Es ist lediglich der an der Kontaktfläche veschleißende Fühlerarm in bestimmten Zeitabständen auszuwechseln.

Eine Ausführungsform der Erfindung wird anhand der Zeichnungen erläutert.
Es zeigen
    Fig. 1    eine schematische Schnittdarstellung eines Teilbereiches einer Filterzentrifuge und
    Fig. 2    die Ansicht gemäß der Schnittlinie II-II in Fig. 1

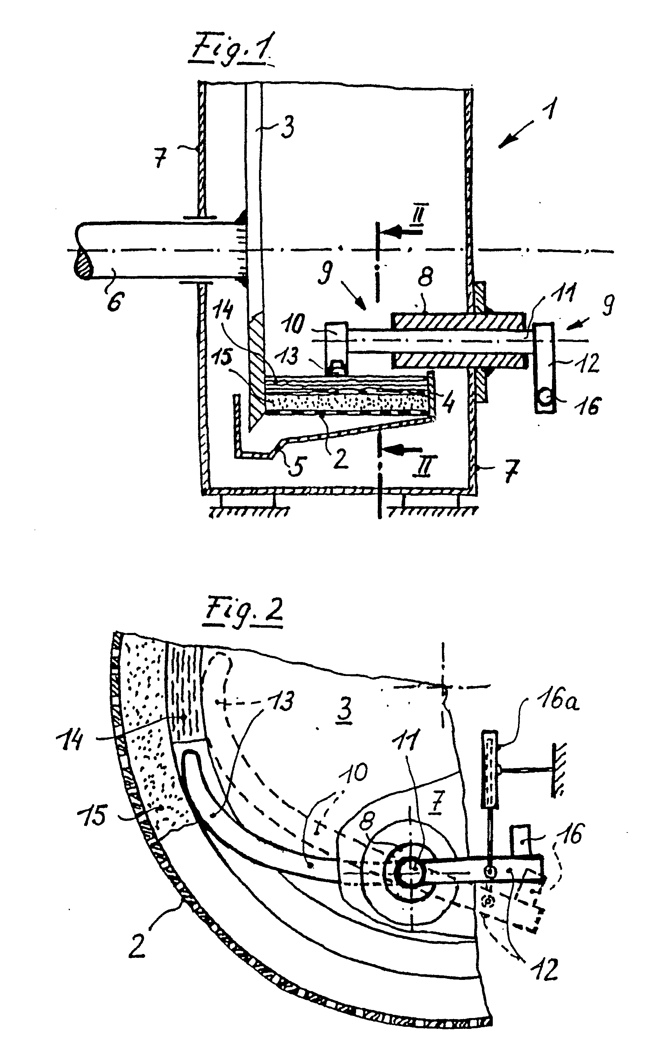

Die in Fig. 1 und 2 dargestellte Filterzentrifuge (1) besteht aus einer Siebtrommel (2) mit jeweils seitlich angeordnetem Trommelboden (3) und Bordring (4). Die Siebtrommel (2) ist von einer Vollmanteltrommel (5) zum Auffangen der Sedimentations- und/oder der Waschflüssigkeit umgeben. Am Trommelboden (3) befindet sich die Zentrifugenwelle (6), die im Zentrifugengehäuse (7) gelagert ist. Auf der der Lagerung gegenüber liegenden Seite des Zentrifugengehäuses (7) ist in einer Lagerungsbuchse (8) ein Fühlerarm (9) gelagert, der aus einem im Inneren der Filterzentrifuge (1) befindlichen Kontaktbügel (10), einer in der Lagerungsbuchse (8) gelagerten Welle (11) und einem außerhalb des Zentrifugengehäuses (7) befindlichen Arm (12) besteht. Der Kontaktbügel (10) weist an seinem freien Ende ein löffelartig gebogenes Kontaktteil (13) auf, das gemäß Fig. 1 auf der Oberfläche der Sedimentationsflüssigkeit (14) gleitet. In der Darstellung nach Fig. 2 befindet sich der in Vollinien dargestellte Fühlerarm (9) mit seinem Kontaktteil (13) auf der Oberfläche des Filterkuchens (15) und der in unterbrochenen Linien dargestellte Fühlerarm (9) mit seinem Kontaktteil (13) auf der Oberfläche der Sedimentationsflüssigkeit (14).

Der Arm (12) trägt einen Schwingungssensor in Form eines Beschleunigungssensoren (16) mit dem die dem Kontaktteil (13) bei Überfahren der Oberfläche des Inhalts der Siebtrommel (2) (Sedimentations-oder Waschflüssigkeitsoberfläche oder Filterkuchenoberfläche) aufgezwungene Schwingungsbewegung gemessen werden kann.

Die Schwingung kann direkt oder indirekt mit folgenden Meßprinzipien ermittelt werden, zum Beispiel:
    a) Beschleunigungsmessung
    b) Wegmessung
    c) Winkelmessung

Bei den Meßprinzipien nach den Punkten b) und c) können in vorteilhafter Weise gleichzeitig sowohl die Schichthöhenmessung als auch die Ermittlung des Eindringzeitpunktes erfolgen. Der in Fig. 2 dargestellte induktive Wegaufnehmer (16 a) kann somit in Einzelstellung sowohl die Funktion als Schwingungssensor als auch die Funktion als Wegaufnehmer (Schichthöhe) erfüllen oder gemeinsam mit einem nach dem Beschleunigungsprinzip arbeitenden Beschleunigungssensoren (16) arbeiten, wobei der induktive Wegaufnehmer (16 a) dann nur zur Ermittlung der Schichthöhe funktioniert. Anstelle des induktiven Wegaufnehmers (16 a) kann auch ein im wesentlichen gleichwirkender Winkelaufnehmer (nicht dargestellt) angeordnet werden.

Im Betrieb werden auf den auf der Oberfläche des Zentrifugeninhaltes gleitenden Kontaktteil (13) Kräfte (Reibung, Impuls) übertragen, die den Führlerarm (9) in Schwingung versetzen, deren Intensität sich je nachdem, ob die Oberfläche des Zentrifugeninhalts aus Flüssigkeit (Sedimentationsflüssigkeit oder Waschflüssigkeit) oder aus Feststoffkuchen besteht, stark unterscheidet. Es stellt sich daher zu dem Zeitpunkt, zu dem die Flüssigkeit in dem sedimentierten Filterkuchen verschwindet und der Kontaktteil auf dem Feststoffkuchen zu gleiten beginnt eine signifikante Änderung der Schwingungsamplituden und der Frequenz ein. Diese Änderung der Schwingungscharakteristik ermöglicht eine präzise Bestimmung des Eintauchzeitpunktes.

Mit dem erfindungsgemäß ausgestalteten Führlerarm lassen sich somit folgende Informationen erzielen:

1. Ende des Füllvorganges (Füllsteuerung)
2. Eintauchzeitpunkt der Suspensionsoder Waschflüssigkeit
3. Höhe der Schicht (Suspensionsschicht; sedimentierte Schicht mit Suspensionsflüssigkeit; Feststoffkuchenschicht; Feststoffkuchenschicht mit Waschflüssigkeitsschicht)

Bei einem außerhalb des Zentrifugengehäuses angeordneten Schwingungssensor ergibt sich dabei der besondere Vorteil, daß bei vollkommener Sicherheit gegenüber Explosionsgefahr keine Beeinträchtigungen des Meßergebnisses durch Verschmutzungen oder durch Temperatureinflüsse eintreten können.

## Patentansprüche

1. Vorrichtung zum ergebnisabhängigen Steuern einer Filterzentrifuge, die einen vorzugsweise im Zentrifugengehäuse gelagerten Fühlerhebel aufweist, der mit der Oberfläche der Füllung der Filterzentrifuge während der Zentrifugierphase in Kontakt haltbar ist, der Sensoreinrichtungen aufweist, mit denen die physikalischen Beschaffenheitswerte, wie z.B. fest oder flüssig, der Oberfläche der Füllung ermittelbar sind und der Einrichtungen aufweist, mit dem die Schichthöhe der Füllung ermittelbar ist, **dadurch gekennzeichnet**, daß die Sensoreinrichtungen aus einem Schwingungssensor bestehen.

2. Vorrichtung nach Anspruch 1, **dadurch gekennzeichnet**, daß der Schwingungssensor außerhalb des Zentrifugengehäuses (7) am Fühlerarm (9) angeordnet ist.

3. Vorrichtung nach einem der Ansprüche 1 oder 2, **dadurch gekennzeichnet**, daß der Schwingungssensor ein Beschleunigungssensor (16) ist.

4. Vorrichtung nach einem der Ansprüche 1 oder 2, **dadurch gekennzeichnet**, daß der Schwingungssensor ein induktiver Wegaufnehmer (16a) ist.

5. Vorrichtung nach einem der Ansprüche 1 oder 2, **dadurch gekennzeichnet**, daß der Fühlerarm (9) im Zentrifugengehäuse (7) drehbar gelagert ist und der Schwingungssensor ein in der Lagerungsstelle angeordneter Winkelsensor ist.

6. Vorrichtung nach Anspruch 5, **dadurch gekennzeichnet**, daß der Winkelsensor sowohl als Schwingungssensor als auch als Wegaufnehmer für die Schichthöhenmessung der Füllung der Filterzentrifuge (1) ausgelegt ist.

7. Verfahren zum Betrieb einer Filterzentrifuge nach einem der Ansprüche 1 bis 7, **dadurch gekennzeichnet**, daß die kontinuierlich während der Zentrifugierphase ermittelten Meßwerte des Schwingungssensors nach der Maßgabe verwertet werden, daß eine signifikante Veränderung der Schwingungscharakteristik als Zeitpunkt für das Eintauchen der Flüssigkeit (Filtratflüssigkeit oder Waschflüssigkeit) in den sedimentierten Feststoffkuchen (Eintauchpunkt) gewertet wird, wo nach dem Eintauchpunkt weitere Bearbeitungsschritte, wie z.B. die Zugabe von weiterer Suspension oder von Waschflüssigkeit, nachschaltbar sind.

Fig.1

Fig.2

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 925 198 (KRAUSS-MAFFEI AG) <br> * das ganze Dokument * <br> — — — | 1-7 | B 04 B 13/00 |
| X | EP-A-0 318 370 (COMPAGNIE FRANCAISE DE SUCRERIE) <br> * Spalte 3, Zeilen 6 - 45; Figur 2 * <br> — — — | 1,2,5-7 | |
| X | FR-A-8 955 85 (C.G.HAUBOLD AG) <br> * Seite 1, Zeile 25 - Seite 3, Zeile 93 * <br> — — — | 1,2,5-7 | |
| X,D,A | DE-A-3 726 227 (KRAUSS-MAFFEI A.G.) <br> * Spalte 3, Zeile 23 - Spalte 4, Zeile 12 * <br> — — — | 1,2,5-7,4 | |
| X | US-A-4 162 980 (BERIT) <br> * Spalte 1, Zeile 55 - Spalte 2, Zeile 34 * <br> — — — — — | 1,2,5-6 | |

|  |
|---|
| **RECHERCHIERTE SACHGEBIETE (Int. Cl.5)** |
| B 04 B |

Der vorliegende Recherchenbericht wurde für alle Patentansprüche erstellt

| Recherchenort | Abschlußdatum der Recherche | Prüfer |
|---|---|---|
| Den Haag | 22 Januar 91 | OECHSNER DE CONINCK |